Europäisches Patentamt

European Patent Office

Office européen des brevets

(19)

(11) Publication number: **0 018 450**
**B1**

## EUROPEAN PATENT SPECIFICATION

(12)

(45) Date of publication of patent specification: **22.06.83**

(21) Application number: **79300705.5**

(22) Date of filing: **25.04.79**

(51) Int. Cl.³: **B 22 D 25/02,**
**B 22 D 27/15, A 61 C 13/20**

(54) **Metal casting apparatus.**

(43) Date of publication of application:
**12.11.80 Bulletin 80/23**

(45) Publication of the grant of the patent:
**22.06.83 Bulletin 83/25**

(84) Designated Contracting States:
**DE FR GB IT NL**

(56) References cited:
**CH - A - 384 783**
**DE - B - 1 116 870**
**DE - B - 2 553 807**
**FR - A - 1 076 658**
**FR - A - 2 025 176**
**FR - A - 2 213 123**

(73) Proprietor: **IWATANI SANGYO KABUSHIKI**
**KAISHA**
**1,4 Hommachi Higashiku**
**Osaka (JP)**

(72) Inventor: **Kidowaki, Yoshimasa**
**c/o Iwatani Sangyo Kabushiki Kaisha 1,4**
**Hommachi**
**Higashiku, Osaka (JP)**
Inventor: **Okamoto, Shiro**
**1-1049 Ooaza Tsunokawa Imazucho**
**Takashimagun Shigaken (JP)**

(74) Representative: **Abnett, Richard Charles et al,**
**REDDIE & GROSE 16 Theobalds Road**
**London WC1X 8PL (GB)**

Courier Press, Leamington Spa, England

Metal casting apparatus

This invention concerns metal casting apparatus. The invention is particularly applicable to metal casting apparatus especially adapted for melting and casting small charges of metal, such as dental inlays, jewelry, precious metal works, and parts of precision machines, and employing a metal heating crucible in communication with a mould *via* an opening through which the molten metal is automatically fed into the mould.

U.S. Patent No. 3,788,821 discloses metal-casting apparatus comprising a melting crucible located above a mould with a passageway therebetween for the flow of molten metal into the mould, with a recess in the crucible for receiving a metallic body, the recess having an opening communicating with said passageway but closable by a metallic body disposed in the recess and electric heating means to melt metal. According to this Patent, a metal is electrically heated in crucible to optimum casting temperature, in response to which the molten metal is sucked under vacuum into a mould through an opening in the bottom of the crucible, the vacuum being produced in the mould. However, this apparatus has the following disadvantages:

(a) The products are liable to faults. The reason for this derives from many factors: e.g. (1) the range of the optimum casting temperature is unfavourably limited, (2) the detector of the optimum temperature is likely to fail to detect an average temperature of the whole molten metal when the temperature changes from spot to spot, thereby resulting in an improper detection of the temperature, and (3) there is unavoidably a time lag between the detection of the optimum temperature and the initiation of the suction at vacuum, during which the molten metal is in danger either of excessive heating or detrimental cooling. When excessively heated, the metal is liable to rough surfaces, blowholes and pinholes. When cooled below the optimum casting temperature, the molten metal lacks its fluidity, thereby failing to reach deep moulding cavities. Accordingly, particularly fine shapes cannot be moulded.

(b) The melting temperature and the optimum casting temperature are different, depending upon the kind of metal. Under the construction of the above Patent, a complicated procedure is required for predetermining the optimum melting temperature.

(c) A temperature detector and an electronic control device for operating a vacuum pump in response to the detection of temperature are essentially required. As these devices require a high degree of reliability, and the apparatus as a whole becomes expensive with a complicated structure.

(d) As the reliability of the temperature detector and the control device must be maintained, a special labour-consuming care must constantly be taken. Nevertheless, the life of these devices is short.

(e) In order to perform the resistance heating of the metal, a vertically split type of crucible is employed with an insulating plate interposed between its pair of sides. In addition, a backing means must be provided for securing the metal in between the paired sides of the crucible. Apart from the consideration mentioned in (d), the apparatus becomes complicated in structure and costly.

Metal-casting apparatus according to the present invention is characterized in that the electric heating means (21) are located above the crucible for melting the metal placed in the crucible from the top to the bottom, whereby the solid metal closing the opening is the last to be melted, the dimensions of the opening and the passageway being such that when the metal closing the opening is melted the molten metal can pass by gravity through the opening against the surface tension of the metal and flow by gravity through the passageway into the mould.

The invention will now be described in more detail, by way of example, with reference to the drawings, in which:—

Figure 1 is a perspective view of a metal casting apparatus embodying the present invention;

Figure 2 is a perspective view on an enlarged scale of the mould assembly incorporated in the metal casting apparatus shown in Figure 1;

Figure 3 is a vertical longitudinal section through the metal casting apparatus shown in Figure 1;

Figure 4 is a perspective view on an enlarged scale of the metal heating crucible in Figure 3;

Figure 5 (A) to (D) inclusive are explanatory views showing a melting process in the crucible;

Figure 6 is a sectional view of the crucible in which a material metal of irregular shape is placed;

Figure 7 is a front view on an enlarged scale of the portion indicated by the arrow VII in Figure 3;

Figure 8 is a sectional view on an enlarged scale of part of the apparatus of Figure 3 including the crucible and the top portion of the mould;

Figure 9 is an explanatory view showing the portion shown in Figure 8 in another operational aspect;

Figure 10 is a sectional view on an enlarged scale taken along the line X—X in Figure 3;

Figure 11 is a perspective view on an enlarged scale of the portion indicated by XI in Figure 10;

Figure 12 is a schematic view of an extra crucible replaceable for the metal heating crucible for moulding a material metal into a mushroom shape;

Figure 13 is a half-split perspective view of the extra crucible shown in Figure 12;

Figure 14 is a perspective view of a material metal moulded into a mushroom shape;

Figure 15 is a half-split perspective view of a modified version of the metal heating crucible;

Figure 16 is a half-split perspective view of another modified version of the metal heating crucible;

Figure 17 is a vertical longitudinal section on an enlarged scale of a modified version of the casting mould; and

Figure 18 is a schematic view of a modified version of the portion indicated by XVIII in Figure 3.

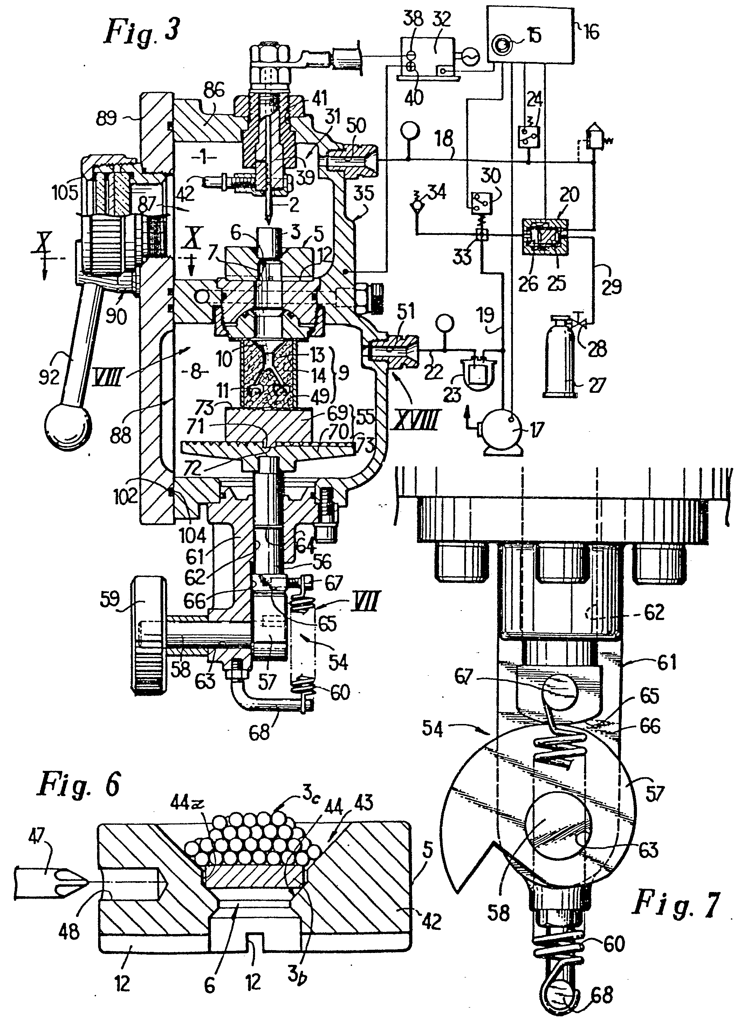

Referring first to Figure 3, the apparatus has a metal heating chamber 1, in which an electric arc 4 is produced between an electrode 2 and the metal material 3 placed in a crucible 5, as best illustrated in Figure 5. With this structure, the metal 3 can be melted from its top to the bottom.

When its bottom portion is completely melted, the molten metal drops through an opening 6 in the bottom of the crucible with support no longer being provided by the bottom portion of the metal material itself. The molten metal passes through a pouring path 7, and pours into a mould 9 provided in communication with the crucible 5. The mould 9 includes an inlet port 10, mould cavities 11, granular packing material 13, and a frame 49. The mould 9 as a unit is housed in a moulding chamber 8. Reference numeral 14 indicates passageways produced among the packed grains 13 through which a gas is passed, which will be particularly described below.

The metal heating chamber 1 and the moulding chamber 8 are filled with an inert gas, such as argon, for the period of time from the initiation of heating to the completion of moulding, thereby protecting the metal against oxidizing or nitrifying. In this case, the inert gas atmosphere is produced such that a pressure gap of about 4 bar (kg/cm²) exists between the chambers 1 and 8. Owing to the pressure gap, the inert gas is caused to flow from the heating chamber 1 to the moulding chamber 8 via a gas passageway 12, the pouring path 7, the inlet port 10, and the moulding cavities 11. As described above, the mould 9 is internally of a porous quality with the packed granular material 13, and the inert gas flows through the passageways 14 among the grains 13. Under the urge of this gas stream, the molten metal accelerates into the mould 9, and can reach the depths of the moulding cavities 11.

In order to produce the inert gas atmosphere in the above described manner, the chambers 1 and 8 are subjected to air evacuation by means of a vacuum pump 17, which is operated by pressing a button 15 under the control of a sequence controller 16. The air in the chamber 1 is withdrawn via pipes 18 and 19, a three-way cock 20 and a coupler 33, and the air in the chamber 8 is withdrawn via a pipe 22 and a strainer 23.

When the pressure values of the chambers 1 and 8 reach 0,93 bar (700 mmHg,) a switch 24 is automatically operated thereby to shift a valve 25 of the three-way cock 20 against a spring 26 to the left in Figure 3. Thus the air evacuation from the chamber 1 is stopped. At this stage the gas is introduced into the heating chamber 1 at the pressure of 3 bar (kg/cm²) set by a regulator 28 via the pipe 18, a pipe 29 and the three-way cock 20, thereby producing an inert gas atmosphere of 3 bar (kg/cm²) in the heating chamber 1. On the other hand, the air evacuation from the chamber 8 continues until the moulding is finished. When the moulding is finished, the sequence controller 16 operates to stop the operation of the vacuum pump 17 and the three-way cock 20, and the valve 25 is returned to the right by means of the spring 26. In this way the air evacuation and the introduction of the inert gas are stopped. The inert gas in the chamber 1 exhausts to the atmosphere via the pipe 18, the three-way cock 20, the coupler 33 and a check valve 34. The inert gas is partially withdrawn into the moulding chamber 8 via the pipes 19 and 22, whereby the atmospheric pressure restores both in the chambers 1 and 8. In this way a cycle of moulding process finishes.

Now, reference will be made to the moulding process:

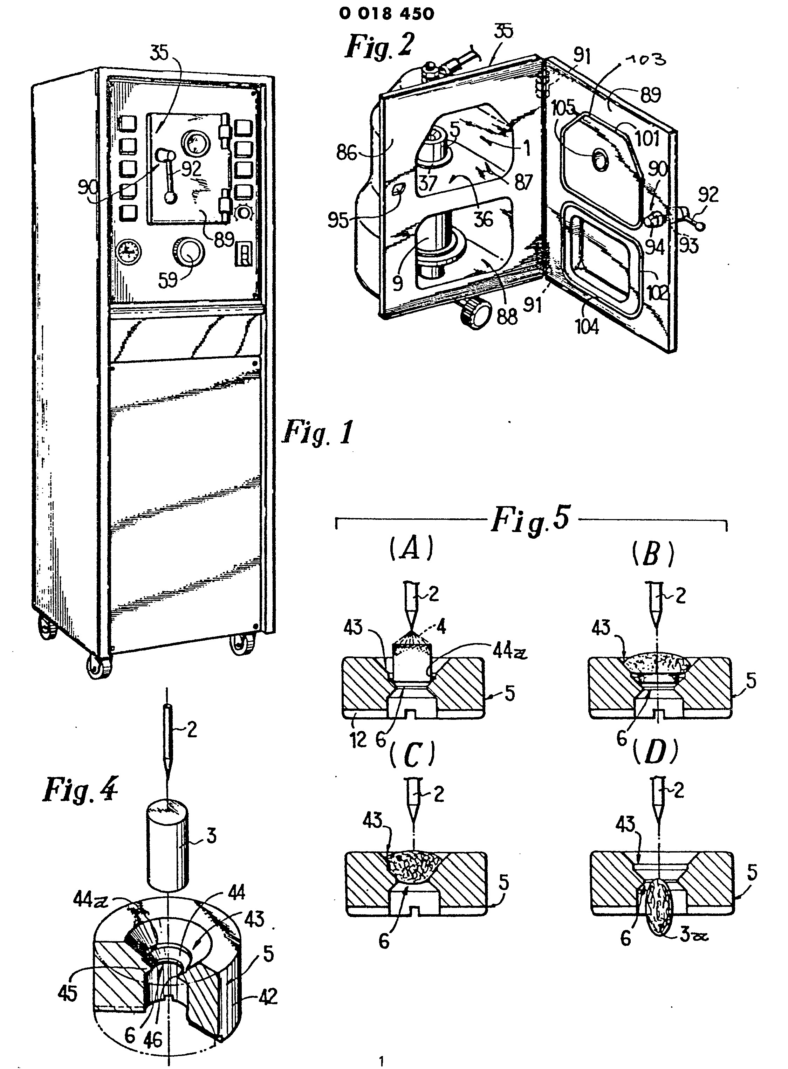

Referring to Figures 2 and 3, reference numeral 35 generally denotes a casting furnace as of aluminium alloy or zinc alloy in which the heating chamber 1 above and the moulding chamber 8 below are provided with a partition 36 located therebetween. The partition 36 is provided with a sleeve 37 in its centre, and the pouring path 7 is produced in this sleeve. The crucible 5 is above and the mould below the partition 36. An electric heating unit 31 is provided in the ceiling of the heating chamber 1, with an electrode 2 suspended therefrom over the crucible 5, so as to effect an electric arc 4 between the electrode 2 and the metal 3 placed in the crucible 5.

To produce the electric arc 4, voltage is impressed across the electrode 2 and the casting furnace 35 from an electric power source 32. The electrode 2 and the casting furnace 35 are electrically connected to terminals 38 and 40 at the power source, respectively. The casting furnace 35, the sleeve 37, the crucible 5 and the metal 3 as a whole constitute an electrical path against the electrode 2. The electrode 2 is carried by a holder 39, which is airtightly secured to the ceiling of the chamber 1 through an insulating fitting 41. The electrode 2 is preferably made of tungsten, and the distance between the same and the metal 3 can be adjusted by means of an adjusting screw 42.

Now referring to Figures 4 and 6, reference will be made to the crucible 5. Its body 42 is made of copper or another electrical conductor, and takes a cylindrical form, having an inverted truncated cone-shaped recess 43 in its centre for receiving the metal 3. The recess includes a step 44a in its middle portion, the step having a perpendicular side. The recess 43 has the opening 6 at its bottom, the opening being defined by a ring-shaped rim 45 having a perpendicular side as best illustrated in Figure 6. The undersurface of the opening 6 diverges outwardly and a surface 44 between the step 44a and the rim 45 converges inwardly so as to minimize facial contact with the metal 3 when the latter is placed in the recess 43. The minimum face-to-face contact is advantageous in enabling the molten metal to flow smoothly with the minimum heat insulating effect; otherwise, the molten metal would readily become solid due to cooling, thereby causing clogging trouble. The size of the opening 6 is predetermined such that it allows the molten metal to pass through by gravity against its surface tension. The edges of the rim 45 are preferably chamfered. When the metal 3 is placed on the surface 44 in the recess 43, the communication between the crucible 5 and the mould 9 is completely blocked by the metal 3 as illustrated in Figure 3. Owing to the conductive nature of the crucible body 42, the heat is evenly transmitted, thereby avoiding spot-by-spot melting in the metal. In addition, the electric arc is produced above the top of the metal 3, whereby the melting of the metal initiates from its top to the bottom, which remains as a plug in the opening 6 until the metal becomes molten, as illustrated in Figure 5 (C).

As described above, the step 44a has a perpendicular side, which is adapted to receive a shapeless material, such as casting waste. In this case, as illustrated in Figure 6, a plate 3b is initially placed in the step 44a, the plate being also made of a metal material, moulded into a disc shape. Then, a shapeless metal 3c is placed on the plate 3b as illustrated in Figure 6. It is necessary that the plate 3b and the shapeless material 3c are made of the same material. The step 44a is shaped so as to locate the metal material exactly therein.

The step 44a can also be used to receive a metal of a normal type but having a relatively large diameter; otherwise, such a metal would be unstable in the recess 43, which results in an uneven distribution of heat.

The crucible body 42 is provided with grooves 12 (in the illustrated embodiment, in a cross-shaped form) at its bottom, which grooves are in communication with the inlet port 10 and the mould 9. The grooves are adapted to enable gas to pass from the heating chamber 1 to the moulding chamber 8 when the former is filled with a gas. As described above, the gas is an inert gas, and performs dual functions; the acceleration of the molten metal, and the prevention thereof from oxidizing or nitrifying.

The crucible body 42 is provided with a detachable handle 47, which is inserted in a blind hole 48. When the crucible is in operation, the handle 47 is unfastened, and when the crucible is taken out, the handle is fastened to the crucible body 42.

As described above, the mould 9 as a unit includes the inlet port 10, the cavities 11, the packing material 13, the passageways 14 running among the packing material, and the frame 49. The frame or casting 49 is made of iron, and in a cylindrical form. Between the opening 6 of the crucible and the inlet port 10, there is provided a path 7 hereinbefore referred to as the pouring path.

The heating chamber 1 is provided with a gas inlet port 50 located adjacent to its ceiling through which a pressurized gas is introduced into the chamber 1. The pipes 18 and 19 are connected to the vacuum pump 17 *via* the electro-magnetic three-way cock 20 and the coupler 33 from the inlet port 50, thereby allowing the air to withdraw from the heating chamber 1 when the vacuum pump 17 is operated with the three-way cock 20 closed. The gas inlet port 50 is also connected to a gas cylinder 27 *via* the pipes 18 and 29, a gas pressure regulator 28, and the three-way cock 20. When the three-way cock 20 is opened, the inert gas is introduced into the heating chamber 1 at a pressure set by the regulator 28. The inert gas introduced into the heating chamber 1 exhausts to the atmosphere through the port 50, the pipe 18, the opened three-way cock 20, the coupler 33 and the check valve 34.

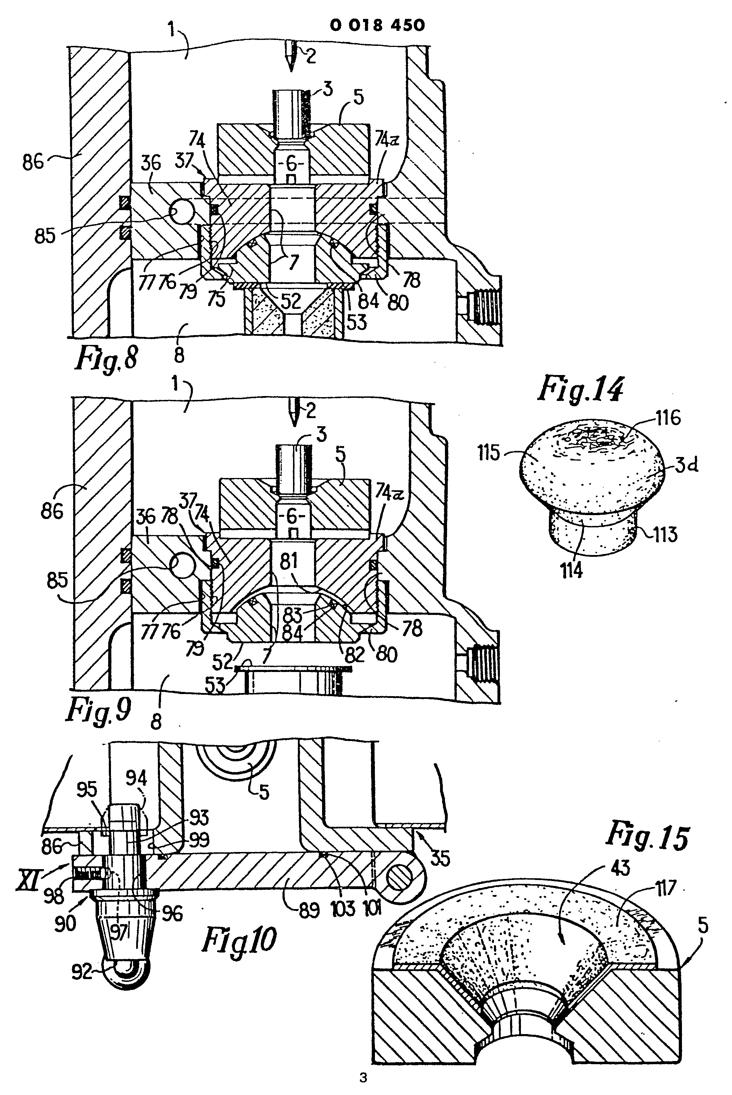

As illustrated in Figures 7 and 8, the moulding chamber 8 is provided with a gas drain port 51 near its ceiling, from which a pipe 22 is led to the vacuum pump 17 *via* a strainer 23, wherein the pipes 19 and 22 are jointed near the vacuum pump 17. When a pressurized gas is introduced into the heating chamber 1 in the described manner, a part of the gas tends to flow into the moulding chamber 8 through the gas drain port 51 *via* the pipes 19 and 22, the coupler 33 and the strainer 23, thereby raising the pressure in the chamber 8 to equilibrium with the chamber 1. Therefore, when a pressurized gas is introduced in the chamber 1, it is necessary to operate the vacuum pump 17 so as to produce a pressure differential between the two chambers 1 and 8.

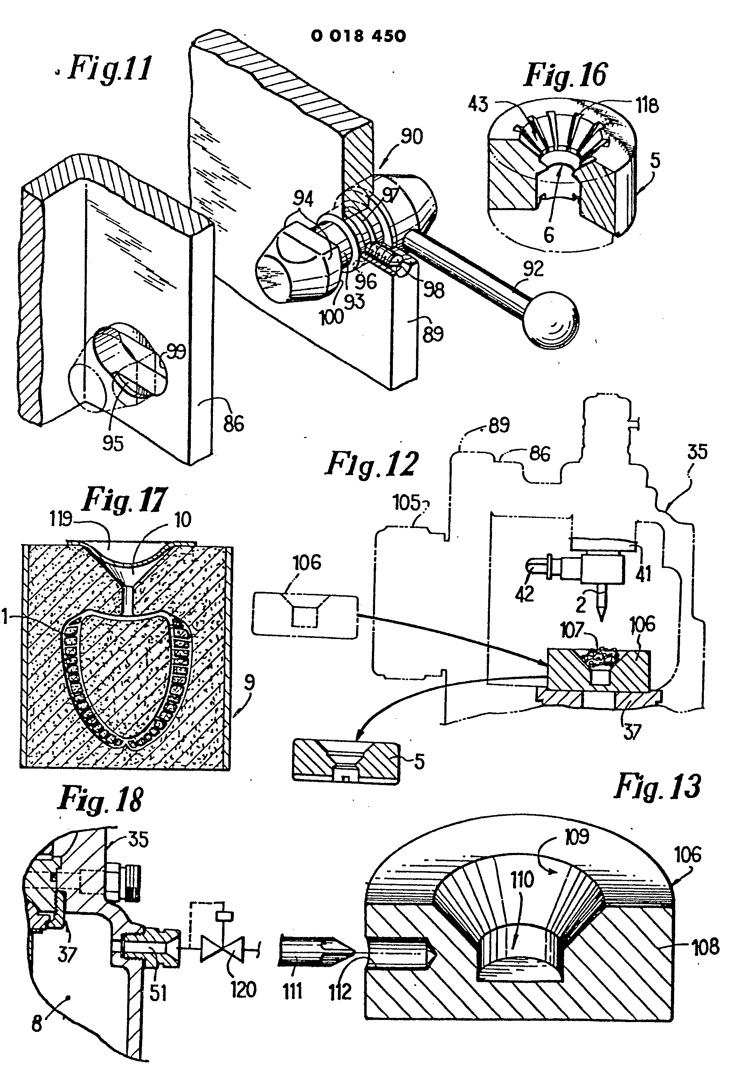

In Figures 8 and 9, between the crucible 5 and the mould 9 there is located a fixture unit 37 including an upper part 74, a lower part 75 and a connector screw 76. The pouring path 7 runs through the upper and lower parts 74 and 75. The fixture unit 37 is detachably fastened to the partition 36 in the following manner:

The partition 36 is provided with an aperture 77 having a relatively large diameter, wherein the inside wall of the aperture includes a ring-shaped projection 78. The upper part 74 of the fixture unit is insertedly held in the aperture 77 through an O-ring 79, and the connector screw 76 is secured to the upper part 74 from its bottom, with the flange portion 74a of the upper part resting on the ring-shaped projection 78 under a downward pull imparted by the connector screw 76. Preferably, the O-ring 79 is made of a heat-proof material.

The connector screw 76 includes a bottom flange portion 80 adapted to receive the lower part 75 thereon. The bottom of the upper part 74 is made with a concave surface 81 while the top of the lower part 75 is made with a convex surface 82 so as to meet each other with an O-ring 83 fitted therebetween, the O-ring being embedded in a groove 84 produced on the convex surface 82 of the lower part. Likewise, the O-ring 83 is preferably made of a heat-proof material. The bottom 52 of the lower part is made flat so as to receive the top end face of the mould 9 tightly with a gasket 53 inter-located therebetween. By pressing the mould 9 upwards, the mould and the fixture unit 37 are tightly connected as illustrated in Figure 8, thereby aligning the opening 6 in the crucible, the pouring path 7, and the inlet port 10 in the mould.

When the mould 9 is placed into contact with the fixture unit 37, a pusher device 54 is used, as seen in Figures 3 and 7, which includes a cam 57, a cam shaft 58, a spring 60, a rod 56 and a base 55 for supporting the mould 9 thereon. The device 54 is operated by a handle 59 fastened to the cam shaft 58.

Referring to Figures 3 and 7, the rod 56 of the pusher device 54 is movably supported in a bore 62 produced in a support 61 secured to the bottom of the casting furnace 35, wherein the cam shaft 58 is supported in a further bore 63 of the support 61, the second bore being substantially at right angle to the first bore 62. The rod 56 is provided with an O-ring 64 so as to secure a sealing effect in the bore 62 during its reciprocal sliding movement therein. In addition, the rod 56 is fastened at its top end to the base 55, and is provided with a cam follower 65 adapted to run on the periphery of the cam 56. In Figure 7, the rear side of the follower 65 keeps facial contact with a cut surface 66 of the support 61, so as to secure its sliding movement thereon.

The mould base 55 consists of two parts 69 and 70, which are dowelled together at 71 and 72. The two parts 69 and 70 are respectively provided with grooves 73 on their top surface, so as to facilitate the smooth flow of gas in the moulding chamber 8. Between the follower 65 and the support 61 there is provided a coil spring 60, so as to impart a continuous downward urge to the mould base 55, when the latter is raised at maximum by the cam action. In the illustrated embodiment the support 61 is provided with a bracket 68 for receiving the lower end of the coil spring 60 while its upper end is secured to a bolt 67 screwed to the follower 65, as best illustrated in Figure 3.

In Figures 8 and 9, the fixture unit 37 is provided with a cooling jacket bore 85, formed in U shape in the partition 36.

The casting furnace 35 is provided with a flat wall or panel 86 in front, best seen in Figure 1, in which two windows 87 and 88 are provided for viewing the heating chamber 1 and the moulding chamber 8, respectively. These windows are airtightly covered by a door 89 when the casting furnace is in operation. The door 89 includes a locking arrangement 90.

Referring to Figures 10 and 11, the locking arrangement 90 includes a rotary shaft 93 and a lever 92 secured to the shaft, wherein the shaft is freely supported in an aperture 96 passed through the door 89. The rotary shaft 93 is provided with a pair of pawls 94 at its top end, these pawls being produced symmetrically with respect to the axis of the shaft 93. In addition, the shaft is provided with an arc shaped groove 97, the arc having a centre angle of 90°. The groove 97 receives a stop screw 98, thereby preventing the shaft 93 from rotating in the aperture 96 at each corner of the groove. The panel 86 is provided with a mating aperture 99 having a shape and size acceptable of the pawls 94 of the shaft. The aperture 99 has its upper and lower rims recessed at 95 on the outlet side through which the pawls project. These recesses 95 are adapted to initially receive slant cam faces 100 of the pawls and then receive the pawls wholly therein during the rotation of the shaft in the anti-clockwise direction by means of the lever 92. In this way the door 89 is locked to the panel 86, wherein the windows 87 and 88 are kept airtight by means of sealing bands 101 and 102 embedded in respective grooves 103 and 104 produced on the inner wall of the panel 89.

When the lock mechanism 90 is at the state illustrated in Figure 11, the door 89 can be freely opened about hinges 91, the lever 92 being maintained horizontal. When the door 89 is to be locked, the lever 92 is rotated in the anti-clockwise direction to its perpendicular position, at which the pair of pawls 94 come into engagement with the recesses 95. When the door is opened from its locked state, the lever 92 is returned to its horizontal position. In this case, when the lever is rotated by about 45° a small gap is initially produced between the windows 87, 88 and the respective sealing bands 101, 102 by virtue of the cam faces 100 on the pawls 94. At this stage, however, the pawls still remain engaged in the recesses 95, thereby preventing the door 89 from opening explosively under a relatively high pressure remaining in the casting furnace 35. An operator can watch the condition of operation inside the heating chamber 1 through a window 105.

As illustrated in Figure 12, the melting crucible 5 can be replaced by an extra crucible 106 for moulding a material of irregular shapes to a desired shape illustrated in Figure 14. Initially, the crucible 5 is replaced by the extra crucible 106 in which odds and ends of cast iron 107 is placed. Then the material 107 is melted by the electric arc in the same manner as described above, and is allowed to become solid therein. In this way a material of irregular shapes such as a waste casting iron can be moulded into a convenient shape, which is readily placed in the regular crucible 5. This saves production cost, and leads to the saving of material.

As illustrated in Figure 13, the extra crucible 106 consists of a body 108 made of electrical conductor, such as copper or carbon, and of a short cylindrical shape, in which an inverted truncated cone-shaped recess 109 is provided, the recess having a further recess 110 of cylindrical shape at its bottom. The body 108 is provided with a handle 111 detachably inserted in a bore 112 in its side wall. The moulded material takes a mushroom form as illustrated in Figure 14, in which the impurities tend to gather at a place 116. These impurities are abraded by means of a grinder or a similar tool. The mushroom shaped material 3d is placed in the crucible 5 and is heated by an electric arc in the described manner. In the crucible 5 the trunk portion 113 of the material 3d keeps linear contact with the surface 44 of the crucible by virtue of the inwardly slant face of the latter, thereby securing an even transmission of heat in the material 3d and a smooth flow of molten metal with the minimum possibility of cooling.

Modifications of the embodiment can be made as follows:

(1) The crucible 5 can be made of carbon, which sublimates at 3727°C. The point of sublimation is higher than the temperature of the electric arc, thereby keeping the crucible safe from sublimation due to the arc heating.

(2) As illustrated in Figure 15, the inside surface of the crucible 5 can be wholly or partially coated with a thermal insulating substance 117, thereby avoiding possible damage to the crucible caused the electric arc or a heated metal. In addition, the coated surface can conserve heat therein for a relatively long time, thereby preventing the molten metal from cooling rapidly.

(3) As illustrated in Figure 16, the inside surface of the recess 43 can be provided with a plurality of radial grooves 118 for insulating heat to the body of the crucible, wherein their width and depth are determined such that the surface tension can work to prevent the molten metal from entering the grooves. Thus, the molten metal is protected against its rapid cooling in the recess 43.

(4) The slant surface 44 in the recess 43 can be provided with one or more steps, or can be convexed or concaved.

(5) The slant surface 44 in the recess 43 can be made rectangular or any other polygonal shape, such as pentagonal or hexagonal, in accordance with the sectional shape of the material metal.

(6) When the moulding cavities 11 are delicate and complicated, as illustrated in Figure 17, thereby resulting in the difficulty in the deep penetration of molten metal therein, the inlet port 10 can be covered with an air-impenetrable tray 119, so as to block the gas stream from entering the cavities 11. Thus, gas pressure accumulates on the tray while the space thereunder remains at a low pressure. At this stage the molten metal is poured into the inlet port 10, and the tray 119 is readily melted away to enable the molten metal to pass through the inlet port under a relatively large pressure differential. In this way the flow of the molten metal accelerates and penetrates deeply into the fine cavities 11.

(7) The extra crucible 106 illustrated in Figure 12 can replace the mould 9 for moulding a material metal of irregular shapes to the desired form illustrated in Figure 14.

(8) Referring to Figure 18, a gas pressure regular 120 can be provided at the outlet of the gas drain port 51 so as to control the internal pressure of the moulding chamber 8 not to reduce to negative pressure but to keep positive pressure. This eliminates the possibility of allowing pinholes and blowholes to occur in the product. In these case, it is required that the internal pressure of the heating chamber 1 is kept relatively high.

It will be appreciated that many other modifications and versions of the embodiment can be made.

## Claims

1. Metal-casting apparatus comprising a melting crucible (5) located above a mould (9) with a passageway (7) therebetween for the flow of molten metal into the mould, with a recess (43) in the crucible (5) for receiving a metallic body (3), the recess having an opening (6) communicating with said passageway (7) but closable by a metallic body disposed in the recess and electric heating means (2) to melt metal, characterised in that the electric heating means (2) are located above the crucible (5) for melting the metal placed in the crucible from the top to the bottom, whereby the solid metal closing the opening (6) is the last to be melted, the dimensions of the opening and the passageway being such that when the metal closing the opening is melted the molten metal can pass by gravity through the opening against the surface tension of the metal and flow by gravity through the passageway into the mould.

2. Apparatus as claimed in claim 1 characterized in that at least the base (42) of the crucible is of electrically-conductive material and the said heating means comprises an electrode (2), said crucible base and said electrode being connected to an electrical circuit for generating an electric arc between the electrode and the metal supported by the crucible.

3. Apparatus as claimed in claim 2 characterized in that the electrode (2) is supported on the roof of a chamber (1) enclosing the crucible (5) and is adjustable relative to the crucible to achieve the appropriate separation for the maintenance of the electric arc.

4. Metal casting apparatus as set forth in claim 1, 2 or 3, wherein the recess includes a step (44) in its inside wall, said step having a side (44a) parallel with the axis of said recess, thereby enabling said metal to rest therein stably.

5. Metal casting apparatus as set forth in claim 1, 2, 3 or 4 wherein the recess takes an inverted truncated cone shape.

6. Metal casting apparatus as set forth in any of the preceding claims comprising a first chamber (1) containing the crucible, a second chamber (8) containing the mould, a partition (36) dividing the first and second chambers, the passageway extending through the partition, a first port (50) in said first chamber and a second port (51) in said second chamber located adjacent to said mould, said first port being connected to a gas cylinder (27) as well as a suction means (17) and said second port being connected to said suction means, and wherein said crucible includes a gas passageway (12) communicating with said liquid passageway.

7. Metal casting apparatus as set forth in claim 6, wherein the mould comprises a frame (49) for housing said cavity, and granular material (14) packed in said frame, said granular material being packed such that gas streams are allowed to pass therethrough.

8. Metal casting apparatus as set forth in claim 6 or 7, further comprising a gas impenetrable cover (119) airtightly placed over said mould, said cover being made of a heat fusible material, thereby blocking a gas stream from entering said mould until said cover melts away.

9. Metal casting apparatus as set forth in any of claims 6 to 8, further comprising a fixture unit (37) interlocked between said crucible and said mould, said fixture unit being supported in an aperture (77) through said partition and including two dividable members, said first member (74) being secured to said partition and said second member (75) being adapted to be placed in airtight contact with said first member, said first member including a spherically concave surface (81) while said second member includes a spherically convex surface (82) for keeping airtight contact with said concave surface of said first member, said concave surface and said convex surface being concentric with respect to the axis of said liquid passageway, thereby enabling said mould to align with said crucible and said liquid passageway without losing said airtight relationship between said first member and said second member.

10. A metal casting apparatus as set forth in claim 9, wherein the mould is supported on a base (55) within said second chamber, said base being carried on a pusher unit (54) for imparting a pushing force thereto, thereby keeping said mould in airtight contact with said fixture unit.

11. A metal casting apparatus as set forth in claim 10, wherein the pusher unit comprises a rod (56) secured to said base and a rotary shaft (58) for imparting a pushing force to said rod, said rotary shaft including a disc-shaped cam (57), said rod including a cam follower (65) adapted to run on the periphery of said cam.

12. Metal casting apparatus as claimed in any of claims 6 to 11, wherein the structure includes a front panel (35) having two windows (87, 88) corresponding to the first chamber (1) and the second chamber (8), said front panel including a sealing door (89) hinged thereto, said door comprising locking means (90) for securing said door to said front panel, said locking means including unlocking means (92, 93) for opening said door by two steps of initial slight opening and final full opening during a single operation of the same.

13. Metal casting apparatus as set forth in claim 12, wherein the unlocking means comprises a rotary shaft (93) and a handle (92) secured to said rotary shaft, said rotary shaft including at least one pawl (94) at its top end whereby said rotary shaft is engaged with said front panel, said pawl including a slant cam face (100), said front panel including an aperture (96) in which said rotary shaft is accepted, said aperture including a recess adapted to receive said slant cam face therein.

14. A metal casting apparatus as set forth in claim 13, wherein the rotary shaft (93) includes a groove (97) of an arc shape having a centre angle of 90°, and stop means (98) for engaging in said groove, thereby restricting the rotation of said rotary shaft within 90°.

15. Metal casting apparatus as set forth in any of the preceding claims, wherein the crucible is made of a material of relatively high thermal conductivity, preferably carbon.

16. Metal casting apparatus as set forth in any of the preceding claims, wherein the recess in said crucible has its peripheral portion coated with a thermal insulating substance.

17. Metal casting apparatus as set forth in any of the preceding claims, wherein the recess in said crucible has its inside surface coated with a thermal insulating substance (117).

18. Metal casting apparatus as set forth in any of the preceding claims, wherein the inside surface of said recess is provided with radial grooves (118) whose width and depth are dimensioned such that surface tension can prevent said molten metal from entering the same.

**Patentansprüche**

1. Gießvorrichtung für Metall mit einem Schmelztiegel (5), der oberhalb einer Form (9) angeordnet ist, wobei dazwischen ein Durchlaß (7) für das Ausströmen des geschmolzenen Metalls in die Form belassen ist, mit einer zur Aufnahme eines Metallkörpers (3) dienenden Ausnehmung (43) in dem Tiegel (5), welche eine Öffnung (6) aufweist, die mit dem Durchlaß (7) in Verbindung steht, jedoch durch einen in der Ausnehmung angeordneten Metallkörper verschließbar ist, und mit einer elektrischen Heizeinrichtung (2) zum Schmelzen von Metall, dadurch gekennzeichnet, daß die elektrische Heizeinrichtung (2) oberhalb des Tiegels (5) angeordnet ist, um das in dem Tiegel eingebrachte Metall von oben nach unten abzuschmelzen, wodurch das die Öffnung (6) verschließende noch feste Metall zuletzt geschmolzen wird, und daß die Abmessungen der Öffnung und des Durchlasses so gewählt sind, daß beim Schmelzen des die Öffnung verschließenden Metalls das Metall unter Schwerewirkung und gegen die Oberflächenspannung des Metalls durch die Öffnung hindurchtreten und unter Schwerewirkung durch den Durchlaß in die Form strömen kann.

2. Gießvorrichtung nach Anspruch 1, dadurch gekennzeichnet, daß zumindest der Unterteil (42) des Tiegels aus elektrisch leitendem Material besteht und die Heizeinrichtung eine Elektrode (2) umfaßt und daß der Unterteil des Tiegels und die Elektrode an einen elektrischen Schaltkreis angeschlossen sind, so daß zwischen der Elektrode und dem von dem Tiegel getragenen Metall ein elektrischer Lichtbogen erzeugbar ist.

3. Gießvorrichtung nach Anspruch 2, dadurch gekennzeichnet, daß die Elektrode (2) an der Oberwandung der den Tiegel (5) umschließenden Kammer (1) abgestützt und gegenüber dem Tiegel einstellbar ist, um einen geeigneten Abstand zur Aufrechterhaltung des Lichtbogens zu erreichen.

4. Gießvorrichtung nach den Ansprüchen 1, 2 oder 3, dadurch gekennzeichnet, daß die Ausnehmung eine Abstufung (44) in ihrer inneren Wandung umfaßt, welche eine parallel zur Achse der Ausnehmung verlaufende Seitenwandung umfaßt, wodurch das Metall eine sichere Aufnahme erfährt.

5. Gießvorrichtung nach einem der Ansprüche 1, 2, 3 oder 4, dadurch gekennzeichnet, daß die Ausnehmung die Form eines umgekehrten Kegelstumpfes aufweist.

6. Gießvorrichtung nach einem der vorangehenden Ansprüche, dadurch gekennzeichnet, daß sie eine erste, den Tiegel enthaltende Kammer (1), eine zweite, die Form enthaltende Kammer (8), eine die erste und die zweite Kammer trennende Trennwand (36), einen durch die Trennwand hindurchführenden Durchlaß, einen ersten Einlaß (50) in der ersten Kammer und einen zweiten Einlaß (51) in der zweiten Kammer, welcher in der Nähe der Form gelegen ist, umfaßt und daß der erste Einlaß (50) mit einem Gasbehälter (27) und mit einer Saugvorrichtung (17) verbindbar ist, während der zweite Einlaß (51) mit der Saugvorrichtung verbunden ist, und daß der Tiegel einen mit dem Flüssigkeitsdurchlaß in Verbindung stehenden Gasdurchlaß (12) aufweist.

7. Gießvorrichtung nach Anspruch 6, dadurch gekennzeichnet, daß die Form einen Rahmen (49) zur Umschließung des Formhohlraums sowie in den Rahmen hineingepacktes körniges Material (14) umfaßt, welches so gepackt ist, daß ein Gasstrom hindurchtreten kann.

8. Gießvorrichtung nach den Ansprüchen 6 oder 7, dadurch gekennzeichnet, daß eine gasundurchlässige, luftdicht über der Form angeordnete Abdeckung (119) vorgesehen ist, welche aus einem in der Hitze schmelzbaren Material besteht, wodurch ein Gasstrom am Eintritt in die Form gehindert ist, bis die Abdeckung wegschmilzt.

9. Gießvorrichtung nach einem der Ansprüche 6 bis 8, dadurch gekennzeichnet, daß ein zwischen dem Tiegel und der Form festgelegtes Haltestück (37) vorgesehen ist, welches in einer Öffnung (77) in der Trennwand abgestützt ist und zwei voneinander trennbare Glieder umfaßt, deren erstes (74) an der Trennwand festgelegt ist und deren zweites (75) in luftdichten Kontakt mit dem ersten Glied bringbar ist, wobei das erste Glied eine konkave kugelige Fläche (81) und das zweite Glied eine konvexe kugelige Fläche (82) aufweisen, die mit der konkaven kugeligen Fläche des ersten Gliedes in luftdichten Kontakt bringbar ist, wobei die konkave und die konvexe Fläche bezüglich der Achse des Flüssigkeitsdurchlasses konzentrisch angeordnet sind, wodurch die Form gegenüber dem Tiegel und dem Flüssigkeitsdurchlaß ausgerichtet werden kann, ohne daß die luftdichte Anlage zwischen dem ersten und dem zweiten Glied aufgegeben werden muß.

10. Gießvorrichtung nach Anspruch 9, dadurch gekennzeichnet, daß die Form auf einem Tragstück (55) in der zweiten Kammer aufruht, welches von einer Stößeleinheit (54) getragen ist und dadurch eine Vorschubkraft erfährt, wodurch die Form in luftdichten Kontakt mit dem Haltestück bringbar ist.

11. Gießvorrichtung nach Anspruch 10, dadurch gekennzeichnet, daß die Stößeleinheit (54) einen an dem Tragstück befestigten Zapfen (56) sowie eine drehbare Welle (58) zur Aufbringung einer Vorschubkraft auf den Zapfen umfaßt und daß die drehbare Welle einen scheibenförmigen Nocken (57) und der Zapfen ein Nockenfolgeglied (65) aufweist, welches auf dem Umfang des Nockens läuft.

12. Gießvorrichtung nach einem der Ansprüche 6 bis 11, dadurch gekennzeichnet, daß eine Frontplatte (35) mit zwei Fenstern (87, 88), welche der ersten Kammer (1) bzw. der zweiten Kammer (8) entsprechen, vorgesehen ist und daß die Frontplatte eine daran mit Scharnieren angeschlagene abgedichtete Tür (89) umfaßt, welche eine Verriegelungseinrichtung (90) zur Verriegelung der Tür an der Frontplatte aufweist, die eine Entriegelungseinrichtung (92, 93) zur Öffnung der Tür in zwei Schritten, nämlich einer anfänglichen leichten Öffnung und einer schließlichen vollen Öffnung, durch eine einzige Betätigung umfaßt.

13. Gießvorrichtung nach Anspruch 12, dadurch gekennzeichnet, daß die Entriegelungseinrichtung einen drehbaren Zapfen (93) und einen daran befestigten Handgriff (92) umfaßt, daß der drehbare Zapfen zumindest einen Riegelvorsprung (94) an seinem oberen Ende zum Angriff des drehbaren Zapfens an der Frontplatte aufweist und daß der Riegelvorsprung eine abgeschrägte Nockenfläche (100) und die Frontplatte eine Öffnung (96) aufweisen, in der der drehbare Zapfen aufnehmbar ist, wobei die Öffnung eine Ausnehmung zur Aufnahme der abgeschrägten Nockenfläche enthält.

14. Gießvorrichtung nach Anspruch 13, dadurch gekennzeichnet, daß der drehbare Zapfen (93) eine bogenförmige, über einen Mittenwinkel von 90° verlaufende Nut sowie einen in die Nut eingreifenden Anschlag (98) aufweist, wodurch die Drehung des drehbaren Zapfens auf 90° beschränkt ist.

15. Gießvorrichtung nach einem der vorangehenden Ansprüche, dadurch gekennzeichnet, daß der Tiegel aus einem Material relativ hoher thermischer Leitfähigkeit, vorzugsweise Kohlenstoff, hergestellt ist.

16. Gießvorrichtung nach einem der vorangehenden Ansprüche, dadurch gekennzeichnet, daß die Ausnehmung in dem Tiegel am Umfang mit einem thermisch isolierenden Material beschichtet ist.

17. Gießvorrichtung nach einem der vorangehenden Ansprüche, dadurch gekennzeichnet, daß die Ausnehmung in dem Tiegel auf ihrer inneren Oberfläche mit einem thermisch isolierenden Material (117) beschichtet ist.

18. Gießvorrichtung nach einem der vorangehenden Ansprüche, dadurch gekennzeichnet, daß die innere Oberfläche der Ausnehmung mit radialen Nuten (118) versehen ist, deren Breite und Tiefe so bemessen sind, daß die Oberflächenspannung das geschmolzene Material am Eintritt in die Nuten hindert.

**Revendications**

1. Appareil pour couler du métal, comprenant un creuset (5) de fusion disposé au-dessus d'un moule (9) avec un passage (7) s'étendant entre eux pour l'écoulement du métal fondu dans le moule, une cavité (43) dans le creuset (5) pour recevoir un corps (3) en métal, ladite cavité ayant une ouverture (6) qui communique avec le passage (7) mais peut être fermée par un corps métallique disposé dans le cavité, et des moyens électriques (2) de chauffage pour fondre le métal, appareil caractérisé en ce que lesdits moyens électriques (2) de chauffage sont disposés au-dessus du creuset (5) pour fondre le métal disposé dans ce dernier depuis la partie supérieure jusqu'à la partie inférieure, grâce à quoi le métal solide fermant l'ouverture (6) est fondu en dernier, les dimensions de l'ouverture et du passage étant telles que lorsque le métal fermant l'ouverture est fondu, le métal en fusion peut passer par gravité à travers l'ouverture à l'encontre de la tension superficielle du métal et s'écouler par gravité dans le moule par le passage.

2. Appareil suivant la revendication 1, caractérisé en ce qu'au moins le corps (42) du creuset est en un matériau conducteur de l'électricité, lesdits moyens de chauffage étant constitués par une électrode (2), le corps du creuset et ladite électrode étant reliés à un circuit électrique pour engendrer un arc entre l'électrode et le métal porté dans le creuset.

3. Appareil suivant la revendication 2, caractérisé en ce que l'électrode (2) est portée par la paroi supérieure d'une chambre (1) enfermant le creuset (5) et est réglable par rapport au creuset pour obtenir la distance appropriée pour entretenir l'arc électrique.

4. Appareil suivant l'une quelconque des revendications 1, 2 ou 3, caractérisé en ce que la cavité comporte un épaulement (44) dans sa paroi interne, cet épaulement ayant un côté (44a) parallèle à l'axe de la cavité, permettant ainsi au métal de reposer dans la cavité de façon stable.

5. Appareil suivant l'une quelconque des revendications 1, 2, 3 ou 4, caractérisé en ce que ladite cavité présente la forme d'un tronc de cône inversé.

6. Appareil suivant l'une quelconque des revendications précédentes, caractérisé en ce qu'il comprend une première chambre (1) contenant le creuset, une seconde chambre (8) contenant le moule, une cloison (36) séparant la première et la seconde chambres, le passage s'étendant à travers ladite cloison, un premier orifice (50) dans ladite première chambre et un second orifice (51) dans ladite seconde chambre, adjacents au moule, ledit premier orifice étant relié à un cylindre à gaz (27) ainsi qu'à un dispositif d'aspiration (17) et ledit second orifice étant relié au dispositif d'aspiration, et en ce que le creuset comprend un passage (12) pour un gaz, qui communique avec ledit passage pour le métal liquide.

7. Appareil suivant la revendication 6, caractérisé en ce que le moule comprend un chassis (49) pour loger une empreinte, et un matériau granulaire (14) tassé dans ledit chassis, ledit matériau granulaire étant compacté de façon que des courants de gaz puissent le traverser.

8. Appareil suivant l'une quelconque des revendications 6 ou 7, caractérisé en ce qu'il comprend un couvercle (119) impénétrable au gaz, disposé de façon étanche à l'air sur le moule, ce couvercle étant en un matériau pouvant fondre à la chaleur, arrêtant ainsi un courant de gaz et l'empêchant de pénétrer dans le moule jusqu'à ledit couvercle soit éliminé par fusion.

9. Appareil suivant l'une quelconque des revendications 6 à 8, caractérisé en ce qu'il comprend en outre un ensemble de fixation (37) en verrouillage mutuel entre le creuset et le moule, ledit ensemble de fixation étant soutenu dans une ouverture (77) ménagée à ravers la cloison et comprenant deux parties séparables, ladite première partie (74) étant fixée sur ladite cloison et ladite partie (75) étant adaptée pour être disposée en contact d'étanchéité à l'air avec ladite première partie, cette dernière comportant une surface sphérique concave (81) tandis que la seconde partie comporte une surface sphérique convexe (82) pour maintenir un contact étanche à l'air avec ladite surface concave de la première partie, cette surface concave et ladite surface convexe étant concentriques par rapport à l'axe du passage pour le liquide, permettant ainsi d'aligner le moule avec le creuset et le passage pour le liquide sans rompre ladite relation d'étanchéité entre lesdites première et seconde parties.

10. Appareil suivant la revendication 9, caractérisé en ce que le moule est soutenu sur un support (55) disposé dans ladite seconde chambre, ce support étant porté par un dispositif de poussée (54) pour lui imprimer une force de poussée, maintenant ainsi le moule en contact de façon étanche à l'air avec ledit ensemble de fixation.

11. Appareil suivant la revendication 10, caractérisé en ce que l'ensemble de poussée comprend une tige (56) fixée au support et un arbre rotatif (58) pour imprimer une force de poussée à ladite tige, ledit arbre rotatif comprenant une came (57) en forme de disque, la tige comportant une contre-came (65) adaptée pour passer sur la périphérie de la came.

12. Appareil suivant l'une quelconque des revendications 6 à 11, caractérisé en ce qu'il comprend un panneau avant (35) ayant deux fenêtres (87, 88) qui correspondent à la première chambre (1) et à la seconde chambre (8), ledit panneau avant comprenant une porte d'étanchéité (89) articulée sur lui, cette porte étant pourvue d'un dispositif de verrouillage comprenant des moyens de déverrouillage (92, 93) pour ouvrir la porte en deux phases de faible ouverture initiale et d'ouverture finale totale au cours d'une seule opération.

13. Appareil suivant la revendication 12, caractérisé en ce que le dispositif de déverrouillage comprend un arbre rotatif (93) et une poignée (92) fixée sur ledit arbre, ce dernier comportant au moins une dent d'arrêt (94) à son extrémité supérieure, grâce à quoi ledit arbre rotatif est engagé avec ledit panneau avant, la dent d'arrêt présentant und surface de came inclinée (100) et le panneau ayant comprenant une ouverture (96) dans laquelle est reçu ledit arbre rotatif, ladite ouverture présentant une dépression adaptée pour recevoir ladite surface de came inclinée.

14. Appareil suivant la revendication 13, caractérisée en ce que l'arbre rotatif (93) comprend une rainure (97) incurvée ayant un angle au centre de 90° et des moyens d'arrêt (98) pour coopérer avec ladite rainure, empêchant ainsi la rotation dudit arbre rotatif de 90°.

15. Appareil suivant l'une quelconque des revendications précédentes, caractérisé en ce que le creuset est en un matériau ayant une conductivité thermique relativement élevée, de préférence en carbone.

16. Appareil suivant l'une quelconque des revendications précédentes, caractérisé en ce que la partie périphérique de la cavité (43) du creuset (5) est revêtue d'une matière thermiquement isolante.

17. Appareil suivant l'une quelconque des revendications précédentes, caractérisé en ce que la surface interne de la cavité (43) du creuset (5) est revêtue d'une matière thermiquement isolante (117).

18. Appareil suivant l'une quelconque des revendications précédentes, caractérisé en ce que la surface interne de ladite cavité comporte des rainures radiales (118) dont la largeur et la profondeur sont telles que la tension superficielle peut empêcher le métal en fusion de pénétrer dans ces rainures.

*Fig. 2*

*Fig. 1*

*Fig. 5*

(A)  (B)

(C)  (D)

*Fig. 4*

1

Fig. 3

Fig. 6

Fig. 7

Fig.8

Fig.9

Fig.14

Fig10

Fig.15

0 018 450

Fig.11

Fig.16

Fig.17

Fig.12

Fig.18

Fig.13

4